# EUROPEAN PATENT APPLICATION

(11) **EP 4 321 023 A1**
(43) Date of publication of application: **14.02.2024**
(21) Application number: 22193561.2
(22) Date of filing: 01.09.2022
(51) Int. Cl.: A01N 25/02, A01N 25/30, A01N 65/12, A01P 17/00, A01P 7/04

(54) **MOSQUITO REPELLENT COMPOSITION COMPRISING YARROW ESSENTIAL OIL**

(30) Priority: 10.08.2022 GR 20220100673
(71) Applicant: National Hellenic Research Foundation, 11635 Athens (GR); Benaki Phytopathological Institute, 14561 Kifissia (GR); University of Patras, 26504 Rio (GR); Theracell Advanced Biotechnology S.A., 14564 Kifissia (GR); Sotiropoulou, Georgia, 26500 Kato Kastellokampos, Patras (GR); Zingkou, Eleni, 30200 Messolonghi (GR)
(72) Inventor: SOTIROPOULOU, Georgia, 26500 Kato Kastellokampos, Patras (GR); ZINGKOU, Eleni, 30200 Messolonghi (GR); ZOGRAFOS, Spyridon, 11635 Athens (GR); TSITSANOU, Aikaterini, 11635 Athens (GR); LINGRI, Panagiota, 11635 Athens (GR); STAMATI, Evgenia, 11635 Athens (GR); ZOUMPOULAKIS, Panagiotis, 11635 Athens (GR); TSIAKA, Thaleia, 11635 Athens (GR); PAPADIMITRIOU, Vasiliki, 11635 Athens (GR); CHATZIDAKI, Maria, 11635 Athens (GR); DEMISLI, Sotiria, 11635 Athens (GR); MICHAILAKIS, Antonios, 14561 Kifissia (GR); PAPACHRISTOS, Dimitrios, 14561 Kifissia (GR); SAKELLARIDIS, Fotios, 15452 Psychiko (GR)
(74) Representative: Roukounas, Dimitrios

(57) **Abstract**

An oil-in-water mosquito repellent emulsion comprising as active ingredient yarrow essential oil and further comprising a surfactant, a co-solvent and water.

## Description

### Technical field of the invention

The present invention relates to the field of mosquito repellent compositions and particularly to mosquito repellent compositions which comprise as active ingredients plant essential oils.

### Background of the invention

There are many insect vectors that can transmit different diseases, such as mosquitoes, and phlebotomid sand flies. Both vectors, are found worldwide in large numbers and they feed on blood from a wide range of mammalian and avian host species. Moreover, climate change, and humans travel and trade is helping the spread of mosquitoes and mosquito-borne diseases, such as West Nile virus, malaria, Dengue, Zika, leishmaniasis etc.

The concept of using natural-based materials to control insects has already many applications in pest management. There are many advantages for using natural-based materials, such as low toxicity and environmentally friendly compounds. Their main disadvantage for their use is the low chemical stability under different climatic conditions and sometimes the limited activity over time (e.g., due to high volatility).

One of the strategies which has been employed to overcome the abovementioned disadvantages is encapsulation. Encapsulation is the process of entrapping a variety of active compounds within a protective carrier material. It is widely practiced industrially offering a broad perspective on a variety of applications (Lachman, 1976, Nedovic, Kalusevic et al., 2011).

The process of encapsulating substances with various coating materials at the nanoscale range is called nanoencapsulation. Microencapsulation is a similar process to nanoencapsulation that only differs in the size of the particles, which typically range from 1 µm to 1 mm, and the fact that it has been applied in almost all industrial sectors for a longer period (Suganya & Anuradha, 2017).

Nano and microencapsulation technology is a very promising area in many different fields and industries, including food, pharmaceuticals, cosmetics and agrochemicals. It enables the protection and controlled release of active compounds and also increases bioavailability and efficacy (Suganya & Anuradha, 2017).

Recent advances in nanotechnology have led to the development of nano-scale delivery systems based on safe, biocompatible, and highly biodegradable components such as lipids and phospholipids. As a result, different types of nano-carriers including microemulsions, nano-emulsions, liposomes, solid lipid nanoparticles (SLN) and nanostructured lipid carriers (NLC) have been developed. Nano-emulsions is a class of colloidal dispersions that has a wide range of applications as skin delivery systems both in pharmaceutical and cosmetic fields. Nano-emulsions are more advantageous than the conventional emulsions and other systems due to their small-sized droplets and large surface area that leads to easy absorption of the active ingredients and the ability to reduce water loss from the skin (Azmi, Elgharbawy et al., 2019, Montenegro, Lai et al., 2016). Industrial production of a large variety of cosmetic products, from water-like fluids and body lotions to gels obtained either by increasing the oil phase content or by adding polymers was allowed using oil-in-water (O/W) nano-emulsions (Sonneville-Aubrun, Simonnet et al., 2004). Apart from water, oils and surfactants nano-emulsions for cosmetic applications may contain volatile and non-volatile silicone oils (cyclomethicone, alkyl and phenyl modified silicones etc.), emollients (oils, lipids, waxes), wetting agents (glycerin, lactic acid, lactate salts, polyhydroxy alcohol, sorbitol etc.), fragrances, dyes, bacteriostatics, preservatives and the like.

The concept of using essential oils and their compounds to control insects has already found applications in pest management (Lee, 2018, Nerio, Olivero-Verbel et al., 2010, Pohlit, Lopes et al., 2011). A few advantages of using essential oils and their compounds are worth mentioning: high species specificity, low toxicity, decreases in environment pollution and the possibility for a mixed application strategy with reduced insecticide application rates (Isman, Miresmailli et al., 2011, Koul, Walia et al., 2008, Regnault-Roger, Vincent et al., 2012).

Yarrow *(Achillea millefolium)* has been employed as a popular medicine for many centuries.. The biological activities of Yarrow (*A. millefolium*), extracts and/or essential oil that have been reviewed in the literature (Nemeth & Bernath, 2008) and they include anti-inflammatory, skin healing, antiulcer, hepatoprotective, antioxidant, anticancer and antimicrobial properties.

Yarrow leaves extract in ethyl acetate from Swedish plants, has been found to reduce by 36% the biting by *Aedes* mosquitoes in field experiments (Jaenson, Palsson et al., 2006). The volatiles released from the Leaves of *A. millefolium* plant, were collected using the solid phase microextraction (SPME) technique. Analysis by gas chromatography-mass spectrometry (GC-MS) identified that the main volatiles were (-)-germacrene D (49.2%), Sabinene (10.4%), p-Cymene (4.4%), β-Pinene (3.8%), 1,8-cineole (2.9%), α-Pinene (2.7%), Camphor (2.5%), β-Caryophyllene (1.2%) and δ-Elemene (1.6%). All of these compounds are known to exhibit insecticidal (I) and/or pesticidal (P) and/or insect repellent (R), properties.

*A. millefolium* essential oil (EO) from plants collected in Elba island (Italy), showed insecticidal activity against *A. albopictus* larvae (Conti, Canale et al., 2010). The main constituents of the EO used in larvicidal bioassays were Eucalyptol (14.2%), β-pinene (12.4%), Borneol (7.1%), Sabinene (6.8%), Artemisia ketone (6.7%), Camphene (6.3%), Camphor (6.1%), Bornyl acetate (5.5%), Santholina alcohol (4.9%), α-Pinene (4.7%), 4-Terpineol (4.5%), β-Caryophyllene (1.5%) and Linalool (1.2%).

*A. A. millefolium* essential oil (EO) derived from the aerial parts of plants from Algeria showed acute toxicity against larvae of the West Nile vector *Culex pipiens* (Benelli, Bedini et al., 2015). Chrysanthenone (24.1%), Borneol (14.2%), 4-Terpineol (8.2%), 2,6-Dimethylphenol (9%), Camphor (4.4%), p-Cymene (4.3%), Camphene (3.1%) 1,8-Cineole (3.0%) and γ-Terpinene (2.9%), were the major constituents of *A. millefolium* essential oil.

### Summary of the invention

The present invention provides the use of essential oil of *Achillea millefolium,* commonly known as yarrow, or common yarrow, as mosquito repellent.

In addition, the present invention provides a mosquito repellent emulsion, such as a nano emulsion comprising as active ingredient essential oil of *Achillea millefolium* dispersed in a continuous phase comprising water.

### Brief description of the drawings

Figure 1 shows the dose-response curves with the effect of *Achillea millefolium* essential oil from northern Greece on the fluorescence of (A) AgamOBP1 N-phenylnaphthalen-1-amine and (B) AgamOBP5 N-phenylnaphthalen-1-amine solutions.
Figure 2 shows the repellency index of a nano-emulsion according to the present invention against *Aedes albopictus* at 0.06, 0.08 and 0.2 µl/cm² doses.
Figure 3 shows the repellency index of nano-emulsions according to the present invention and of Yarrow and Lavandin (*Hybrid Lavandula intermedia*) essential oils against *Aedes albopictus* at 0.2 µl/cm² dose.
Figure 4 shows the repellency index of a nano-emulsion according to the present invention against *Aedes albopictus* at 0.05 and 0.2 µl/cm² doses.
Figure 5 shows the quantification of skin tissue viability upon treatment with nano-emulsions according to the present invention. Data are expressed as % mean tissue viability ± SD of 2 independent tissues. ns, no significant; *p < 0.05; ***p ≤ 0.001. NC (negative control): DPBS; PC (positive control): 5% SDS.
Figure 6 shows the quantification of ocular tissue viability upon treatment with nano-emulsions according to the present invention. Data are expressed as % mean tissue viability ± SD of 2 independent tissues. **p ≤ 0.01; ***p ≤ 0.001. NC: sterile deionized water; PC: methyl acetate.
Figure 7 shows the results of measurements of electrical impedance of skin surface at different time points after exposure to nano-emulsions according to the present invention. Data are shown as mean ± SD of independent experimental replicates (n=2); ns: not significant; *p < 0.05; ***p ≤ 0.001.
Figure 8 shows the skin morphology/microstructure of 3D human skin tissues upon topical application of nano-emulsions according to the present invention. The dashed line represents the epidermis-dermis junction. The double arrows indicate the damaged tissue.
Figure 9 shows the analysis of the expression of tight junction proteins encoding genes on 3D human skin tissues upon topical application of nano-emulsions according to the present invention. Data are shown as mean ± SD of 2 independent experiments. n=2 tissues for each nano-emulsion and control; ns not significant; *p < 0.05.

### Detailed description of the invention

Essential oils are composed of lipophilic and highly volatile secondary plant metabolites, which can be physically separated from other plant components or membranous tissue. As defined by the International Organization for Standardization (ISO), the term "essential oil" is reserved for a "product obtained from vegetable raw material, either by distillation with water or steam, or from the epicarp of citrus fruits by a mechanical process, or by dry distillation" [ISO 9235, http://www.iso.org/iso/catalogue_detail.htm?csnumber=51017].

Essential oils are popular as ingredients of perfumes, cosmetics and household cleaning products, as well as being used for flavoring food and drink. Furthermore, essential oils are as well very useful in the treatment of different diseases and their medicinal applications have become very popular.

The present inventors have found that essential oil of *Achillea millefolium,* commonly known as yarrow, or common yarrow, has mosquito repellent properties.

Namely, the present inventors have found that essential oil of *Achillea millefolium* exhibits a high binding affinity to one or more mosquito Odorant Binding Proteins (OBP) with a predominantly female expression bias (Biessmann, Nguyen et al., 2005).

Specifically, essential oil of *Achillea millefolium* exhibits an IC50 of 0.3975±0.033 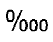 v/v ± SD against OBP1 and an IC50 of 0.2±0.02 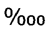 v/v ± SD against OBP5. The use of OBPs in homology modeling, molecular docking and in vitro binding screening studies for the discovery of active semiochemicals has been applied to mosquitoes (de Brito, de Oliveira et al., 2021, do Bomfim, Araujo et al., 2020, Kröber, Koussis et al., 2018, Thireou, Kythreoti et al., 2018) as well as to other insect pests.

Studies of plant volatiles identified by OBP-based screening of essential oils (Kröber et al., 2018) revealed that that the most potent of the identified repellent compounds act directly on the Odorant Receptor coreceptor (ORco) subunit of the heteromeric ORs (Kythreoti, Sdralia et al., 2021, Tsitoura, Koussis et al., 2015). The same OBP-based screening study showed that essential oils that had shown no or low affinity for any of the tested OBPs lack strong repellency (Kröber et al., 2018).

Thus, the present invention provides the use of essential oil of *Achillea millefolium* as mosquito repellent.

The present invention also provides a mosquito repellent emulsion comprising as active ingredient essential oil of *Achillea millefolium* dispersed in a continuous phase comprising water, wherein the emulsion further comprises a surfactant selected from a mono- and diglyceride of a fatty acid, ethoxylated sorbitan ester, a polyoxyethylene sorbitan ester (also known as polysorbate) sorbitan trioleate, PEG-8 caprylic/capric glyceride or a mixture thereof, and a co-solvent selected from ethanol, glycerol, or diethylene glycol monoethyl ether.

Preferably, the emulsion is a nano-emulsion. The term "nano-emulsion" refers to an emulsion with droplet sizes in the nanometer range, i.e. an emulsion with droplet sizes lower than 1 µm, preferably from 20 nm to 500 nm.

The emulsion of the present invention is an oil-in-water emulsion.

The role of the surfactant is to reduce the interfacial tension decreasing the size of the produced oil droplets and to create a thin monolayer around them preventing droplets from coalescing.

Preferably, the total concentration of the surfactant in the emulsion is from 0.1% to 15% w/w, more preferably from 0.5% to 10% w/w and even more preferably from 1% to 6% w/w.

Typically, when increasing the amount of the surfactant, a decrease in the oil droplets' size is observed.

Preferably, the total concentration of the cosolvent in the emulsion is from 0.1% to 10% w/w, more preferably from 0.2% to 5% w/w and even more preferably from 0.5% to 1.5% w/w.

Preferably, the concentration of the *Achillea millefolium* essential oil in the emulsion is from 0.1% to 10% w/w, more preferably from 0.2% to 6% w/w and even more preferably from 0.5% to 4% w/w.

The term "% w/w" used throughout the present application means grams of an ingredient per 100 grams of the emulsion.

The emulsion may further comprise essential oils from other plants as further active ingredients. For example, the emulsion may also comprise an essential oil from a plant selected from Acinos spp. (e.g. *Acinos alpinus, Acinos suaveolens, Acinos alpinus, Acinos suaveolens*), Calamintha spp. (e.g. *Calamintha nepeta, Calamintha cretica, Calamintha glandulosa, Calamintha menthifolia),* Lavandula spp. (e.g. *Lavandula angustifolia, Hybrid Lavandula intermedia, Lavandula stoechas),* Marrubium spp. (e.g. *Marrubium peregrinum, Marrubium velutinum),* Melissa spp. (e.g. *Melissa officinalis),* Mentha spp. (e.g. *Mentha spicata, Mentha longifolia, Mentha piperita, Mentha pulegium, Mentha X villoso-nervata),* Micromeria spp. (e.g. *Micromeria graeca, Micromeria Juliana),* Nepeta spp. (e.g. *Nepeta argolica),* Phlomis spp. (e.g. *Phlomis cretica, Phlomis fruticose, Phlomis lanata, Phlomis samia),* Prasium spp. (e.g. *Prasium majus),* Ocimum spp. (e.g. *Ocimum basilicum),* Origanum spp. (e.g. *Origanum vulgare, Origanum calcaratum, Origanum dictamnus, Origanum majorana, Origanum onites, Origanum onites, Origanum scabrum, Coridothymus capitatus),* Rosmarinus spp. (e.g. *Rosmarinus officinalis), Salvia spp. (e.g. Salvia candidissima, Salvia fruticose, Salvia glutinosa, Salvia officinalis, Salvia pomifera, Salvia ringens, Salvia sclarea, Salvia verbenaca, Salvia verticillata),* Satureja spp. (e.g. *Satureja parnassica, Satureja spinose, Satureja thymbra),* Scutellaria spp. *(Scutellaria albida, Scutellaria rupestris, Scutellaria sieberi),* Sideritis spp. (e.g. *Sideritis clandestine, Sideritis euboea, Sideritis lanata, Sideritis raeseri, Sideritis romana),* Stachys spp. (e.g. *Stachys alopecuros, Stachys cretica, Stachys euboica, Stachys germanica, Stachys ionica, Stachys menthifolia, Stachys recta, Stachys scardica, Stachys spinulosa, Stachys spruneri, Stachys swainsonii),* Teucrium spp. (e.g. *Teucrium brevifolium, Teucrium divaricatum, Teucrium flavum, Teucrium montbretii, Teucrium polium), Thymus spp.* (e.g. *Thymus atticus, Thymus leucospermus,, Thymus longicaulis,* , *Thymus parnassicus, Thymus samius, Thymus teucrioides, Thymus vulgaris, Thymus zygioides).* Preferably, the emulsion comprises an essential oil from a plant selected from Origanum spp., Mentha spp., Lavandula spp or Melissa spp. More preferably, the emulsion comprises further to the essential oil of *Achillea millefolium,* essential oil of Lavandula spp, *such* as *Hybrid Lavandula intermedia* (Lavandin). It has been found that the combination of essential oils of *Achillea millefolium* and Lavandula spp provides a synergistic mosquito repellency effect.

When present, the concentration of the further essential oil in the emulsion is preferably from 0.1% to 10% w/w, more preferably from 0.2% to 5% w/w and even more preferably from 0.5% to 2% w/w.

According to a preferred embodiment, the emulsion of the present invention comprises
from 1% to 3% w/w essential oil of *Achillea millefolium,*
from 0.5% to 1.5% w/w polyethylene glycol-8 -8 caprylic/capric glycerides,
from 1.5% to 2.5% w/w polysorbate 80,
from 0.5% to 1.5% w/w sorbitan trioleate,
from 0.5% to 1.5% w/w diethylene glycol monoethyl ether and
water.

According to another preferred embodiment, the emulsion of the present invention comprises from 1% to 3% w/w essential oil of *Achillea millefolium,*
from 0.5% to 1.5% w/w essential oil of Lavandula spp.
from 0.5% to 1.5% w/w polyethylene glycol-8 -8 caprylic/capricglycerides,
from 1.5% to 2.5% w/w polysorbate 80,
from 0.5% to 1.5% w/w sorbitan trioleate,
from 0.5% to 1.5% w/w diethylene glycol monoethyl ether and
water.

The emulsion of the present invention may be produced following methods known in the art.

For example, the emulsion may be prepared by the following low-energy method: The surfactant(s), the cosolvent and the essential oil(s) are mixed under magnetic stirring at room temperature. Then the mixture is titrated with water under constant magnetic stirring for 1h.

As another example, the emulsion may be prepared by the following high-energy method: Surfactant(s), cosolvent and essential oil(s) are mixed to form the oil phase. Then, coarse emulsions are obtained by mixing the essential oil phase with the aqueous phase at ambient temperature with mechanical stirring. The coarse emulsions is then passed through a Panda PLUS1000 (GEA, Niro Soavi) high-pressure homogenizer at 220-240 bar applying up to 10 recirculation passages.

The emulsion of the present invention exhibits excellent mosquito repellent efficacy. Furthermore, it exhibits excellent physical properties and safeguards the stability of the active ingredient(s). Furthermore, it achieves sustained release rate of the active ingredient(s) and therefore provides a long duration of mosquito repellency. The repellent formulations contain (up to) 95% natural ingredients and provide moisturizing properties. In addition, because of the known pharmacological and skin beneficial properties of Yarrow oil, the emulsion displays H₂O₂ scavenging activity (antioxidant), after bite effect (anti-inflammatory activity), antibacterial activity and skin healing properties (against wounds, sores, skin rash, cuts and abrasions).

The emulsion of the present invention may contain one or more further excipients well known in the art, such as preservatives, antimicrobial agents, fragrances, pigments, diluents, thickeners, propellants and the like. Examples of preservatives include parabens, imidazolidinyl urea, phenoxyethanol and the like, Examples of antimicrobial agents include chlorhexidine salts, benzalkonium chloride, benzethonium chloride, polyhexamethylene biguanide, cetyl puridium chloride and the like. Examples of diluents include, water, ethanol, propanol, acetone and the like. Examples of thickeners include carboxyvinyl polymer, hydroxyethyl cellulose, hydroxypropyl cellulose, hydroxypropylmethyl cellulose and the like. Examples of propellants include propane, butane, isobutane and the like. The emulsion may be formulated in different forms, well known in the art, such as lotion, cream, ointment, spray, gel and the like. Such forms may be prepared by following methods well known in the art.

### Examples

### Example 1

### Determination of IC50 of Achillea millefolium essential oil against AgamOBP1 and AgamOBP5

Yarrow *(Achillea millefolium)* essential oil used in OBP-binding assays was from plants originated from Northern Greece. The main constituents of the EO tested by *in vitro* competition assays are listed in **Table 3.**

**Table 3. Relative amounts (%) of compounds in Yarrow (Achillea millefolium) oil from Northern Greece**

| Compound | % |
|---|---|
| trans-Nerolidol | 11.09 |
| γ-Eudesmol | 10.18 |
| Carvacrol | 7.85 |
| Menthol | 7.74 |
| β-Caryophyllene | 5.26 |
| p-Menthone | 4.82 |
| Caryophyllene oxide | 2.80 |
| menthyl acetate | 2.60 |
| δ-cadinene | 2.58 |
| epi-alpha-Bisabolol | 2.54 |
| Sabinene | 2.38 |
| neo-Menthol | 1.97 |
| β-Pinene | 1.86 |
| p-Cymene | 1.60 |
| tau-Cadinol | 1.47 |
| γ-Terpinene | 1.31 |
| D-germacrene | 1.30 |
| 1,8-cineol | 1.28 |
| β-chamigrene | 1.27 |
| Viridiflorol | 1.18 |
| γ-Himachalene | 1.15 |
| α-Pinene | 1.10 |
| β-Himachalene | 1.04 |
| Limonene | 1.03 |
| γ-cadinene | 1.02 |
| ar-curcumene | 0.95 |
| β-Oplopenone | 0.94 |
| Santolinatriene (0.10), α-thujene (0.37), camphene (0.18), myrcene (0.25), α-phellandrene (0.10), α-terpinene (0.72), α-terpinolene (0.20), β-thujone (0.72), camphor (0.21), terpinen-4-ol (0.52), bornyl acetate (0.24), alpha-copaene (0.21), β-bourbonene (0.20), geranyl acetate (0.23), β-elemene (0.13), α-himachalene (0.61), α-humulene (0.40), geranyl acetone (0.39), trans-β-farnesene (0.39), viridiflorene (0.28), α-zingiberene (0.52), β-bisabolene (0.75), α-calacorene (0.52), spathulenol (0.76), salvial-4(14)-en-1-one (0.27), farnesol (2Z,6E) (0.54) | 9.81 |

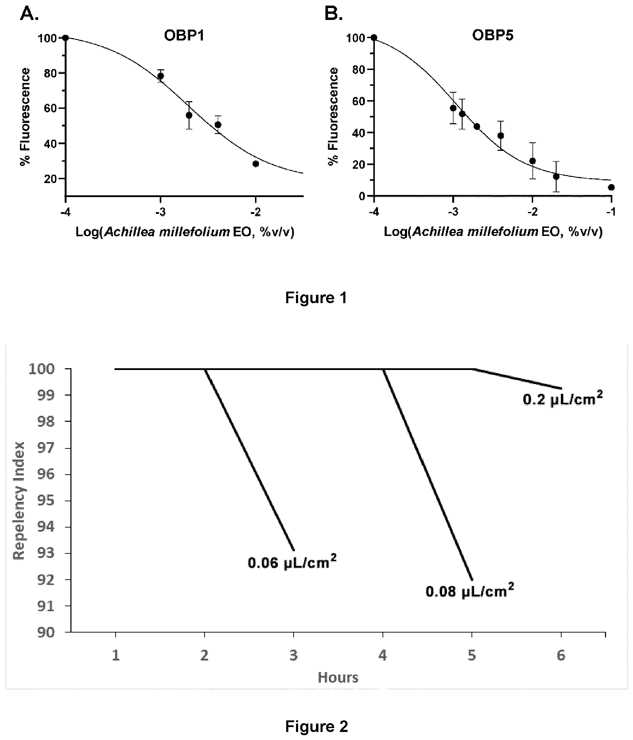

The displacement of the fluorescent probe N-phenylnaphthalen-1-amine (1-NPN) by the EO was determined, as previously described (Campanacci, Krieger et al., 2001). Proteins were assayed at 2µM final concentration in the presence of 10µM of the fluorescence probe 1-NPN. Titration was performed with 8 different concentrations 0 to 0.1% v/v of each EO, at a final volume of 300µl. EOs were dissolved in 100% methanol and the final content of methanol was 1.5%. The IC50 values were obtained by fitting the data to a competition dose-response curve of fluorescence versus the log of the concentration of Yarrow *(Achillea millefolium)* oil from Northern Greece (competitor). The IC50 of the tested Yarrow oil was 0.3975±0.033 %v/v and 0.2 ±0.02 %v/v for AgamOBP1 and AgamOBP5, respectively, as shown in Figure 1.

### Example 2

The present example discloses two nano-emulsion according to the present invention. The first nano-emulsion comprises essential oil of *Achillea millefolium* as active ingredient. The second nano-emulsion comprises a mixture of essential oils of *Achillea millefolium* and *Hybrid Lavandula intermedia* as active ingredients. The compositions of the nano-emulsion are given in Table 4.

**TABLE 4**

| | **Ingredient** | **% (w/w)** | **Function** |
|---|---|---|---|
| **Nano-emulsions** | | | |
| 1. | Water | 93 | Continuous aqueous |
| | PEG-8 caprylic/capric | 1 | phase |
| | glycerides Polysorbate 80 | 2 | Surfactant |
| | (polyoxyethylene (20) sorbitan monooleate) | 1 | Surfactant |
| | Sorbitan trioleate | 1 | Surfactant |
| | Diethylene glycol monoethyl | 2 | Co solvent |
| | ether | | Dispersed oil phase |
| 2. | Yarrow essential oil | | |
| | | 93 | |
| | | 1 | Continuous aqueous |
| | Water | 2 | phase |
| | PEG-8 caprylic/capric | | Surfactant |
| | glycerides Polysorbate 80 | 1 | Surfactant |
| | (polyoxyethylene (20) sorbitan | 1 | |
| | monooleate) | 1 | Surfactant |
| | Sorbitan trioleate | 1 | Co solvent |
| | Diethylene glycol monoethyl | | Dispersed oil phase |
| | ether | | Dispersed oil phase |
| | Yarrow essential oil | | |
| | *Hybrid Lavandula intermedia* | | |
| | essential oil | | |

The nano-emulsion were prepared by a method comprising the following steps:
Step 1: Preparation of the oil phase by mixing essential oil/oils, PEG-8 caprylic/capric glycerides (Labrasol^{®}), polysorbate 80 (Tween 80^{®}), sorbitan trioleate (Span 85^{®}), diethylene glycol monoethyl ether (Transcutol^{®}) in the chosen concentrations.
Step 2: Deionized water is used as the aqueous phase.
Step 3: The resulting oil phase from Step 1 is titrated with the aqueous phase of Step 2 under continuous magnetic stirring leading to the formation of an emulsion containing oil droplets at the nanoscale.

The droplet size of nano-emulsions 1 and 2 above is 100-300 nm.

### Example 3

### Effect studies of nano-emulsions of Yarrow essential oil (2% Achillea millefolium essential oil) against the mosquito species Aedes albopictus and Culex pipiens biotype molestus under laboratory conditions.

The bioactivity evaluation of the nanoencapsulated Yarrow oil was conducted with *Aedes albopictus* and *Culex pipiens* biotype molestus mosquitoes under laboratory conditions. The insects used were obtained from a laboratory colony. The tested nano-emulstion was nano-emulsion 1 of Example 2, shown in Table 4. Adult *Ae. albopictus* and *Culex pipiens molestus* mosquitoes were obtained from the laboratory colony of Benaki Phytopathological Institute (Kifissia, Greece). The laboratory colony is maintained at 25±2 °C, 80% relative humidity, and 16/8-h light/dark photoperiod (Theochari, Giatropoulos et al., 2020).

For the repellent activity with *Aedes albopictus* the assessment was based on the human landing counts (Giatropoulos, Papachristos et al., 2012). The study was conducted into a cage (33x33x33 cm) with a 32x32 mesh and with a 20-cm diameter circular opening fitted with cloth sleeve. Each cage contained 100 adult mosquitoes (sex ratio 1:1), 5-10-day-old, starved for 12 h at 25±2°C and 70-80% relative humidity. A plastic glove with an opening measuring 5x5 cm was employed for all the bioassays. All testing materials were applied on paper (Whatman chromatography paper) of 24 cm² total area and tested at different doses (from 0.05 to 0.2 µl/cm²). For the repellent activity with *Culex pipiens* biotype molestus the assessment, instead of the arm-in-cage assay, another technique was chosen according to the test method of sugar-feeding behavioral bioassay (Syed & Leal, 2008). Each testing material was delivered from paper cylinders and fifty to 80 adult mosquitoes, 5-10-day-old, were used per trial and different doses of each compound evaluated (from 0.05 to 0.2 µl/cm²).

A comparison of repellant activity of the tested nano-emulsion was conducted at three different doses 0.06, 0.08 and 0.2 µL/cm² or 60, 80 και 200 µg/cm² (µL/cm²- volume of tested material per application area or µg/cm² - quantity of tested material per application area, where "tested material" refers to the contained essential oil(s) in each tested nano-emulsion). All nano-emulsions were tested for *Aedes albopictus* females' response at different hours after their preparation until repellant activity was not zero (response versus time until we recorded the first landings). Mosquito landings for each treatment were counted over 5-minute periods at different time periods (aging). Landing numbers were also converted to repellence indices (RI±SE) using the following equation RI = [1 - (T/C) ] x 100, where C was the number of landings in control and T the number of landings in treatment (control). Repellency Indices of all tested doses at different hours are depicted in Figure 2.

### Example 4

### Effect studies of nano-emulsions of mixture of Yarrow essential oil (Achillea millefolium essential oil) with Lavandin oil (Hybrid Lavandula intermedia essential oil) [1:1 w/w] against the mosquito species Aedes albopictus and Culex pipiens biotype molestus under laboratory conditions.

The bioactivity evaluation of the nanoencapsulated mixtures of Yarrow oil with Lavandin oil was conducted with *Aedes albopictus* and *Culex pipiens* biotype molestus mosquitoes under laboratory conditions as described in Example 3 above. The insects used were obtained from a laboratory colony.

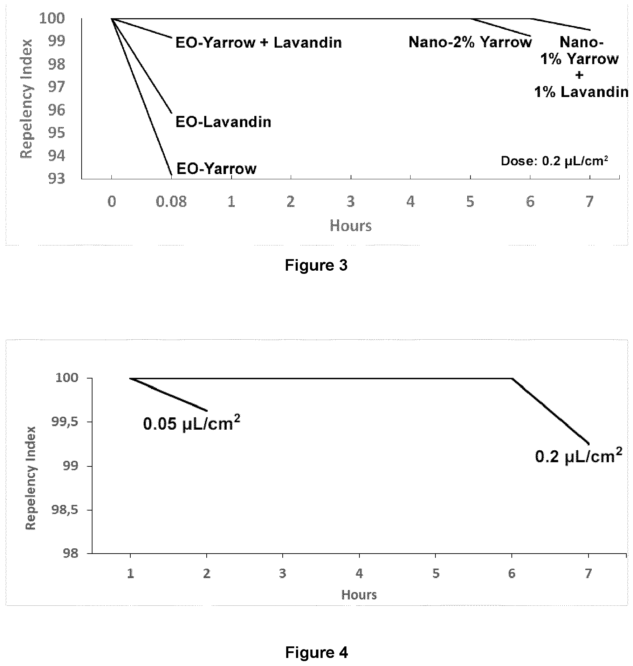

A comparison of repellant activity for two nano-emulsions and 2 essential oils conducted at 0.2 µl/cm² doses. The first nano-emulsion was of nano-emulsion 1 of Example 2 and the second nano-emulsion was nano-emulsion 2 of Example 2. The nano-emulsions compared with the current essential oils (Yarrow and Lavandin) and their mixture [in ratio 1:1 w/w]. Both nano-emulsions and essential oils were tested for *Aedes albopictus* females' response at different hours after their preparation until repellant activity was not zero (response versus time until we recorded the first landings). Mosquito landings for each treatment were counted over 5-minute periods at different time periods (aging). Landing numbers were also converted to repellence indices (RI±SE) using the following equation RI = [1 - (T/C) ] x 100, where C was the number of landings in control and T the number of landings in treatment (control). Repellency Indices of all tested materials at different hours are depicted in Figure 3.

Furthermore, a comparison of repellant activity for nano-emulsion 2 of Example 2 against *Aedes albopictus* conducted at 0.05 and 0.2 µl/cm² doses. The repellency Indices of two doses at different hours are depicted in Figure 4.

### Example 5

### SKIN IRRITATION. In vitro skin irritation test of nano-emulsions of Yarrow essential oil (2% Achillea millefolium essential oil) or nano-emulsion of mixture of 1% Yarrow essential oil (Achillea millefolium essential oil) with 1% Lavandin oil (Hybrid Lavandula intermedia essential oil) [1:1 w/w].

The EpiDerm^{™} skin irritation test kit (Schafer-Korting, Bock et al., 2008) (EPI-200-SIT) was purchased by MatTek (https://www.mattek.com/) and used in this study. The value of this method lies in that it provides *in vivo* prediction for classification testing of the nano-emulsions as irritant or non-irritant, based on *in vitro* results. According to the EU and GHS classification (R38/ Category 2 or no label), an irritant is predicted if the mean relative tissue viability of individual tissues exposed to the test substance is reduced below 50% of the mean viability of the negative controls run in parallel.

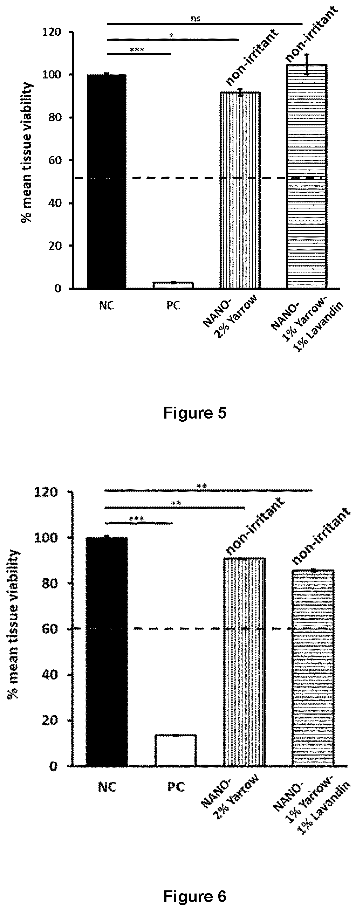

The experimental procedure for the skin irritation test is the following. Fresh tissues are transferred onto 6-well plates and pre-incubated under standard culture conditions for 1 hour in the assay medium (DMEM based medium, MatTek). Then, the assay medium is replaced by fresh assay medium, and tissues are incubated overnight. Each nano-emulsion (dose: 200 µg EO /cm²) and control samples are applied on the Epiderm^{™} tissues for 60±1 min, then, removed by extensive rinsing tissues with Ca⁺⁺Mg⁺⁺Free-DPBS. The tissues are transferred to new 6-well plates pre-filled with 0.9 ml assay medium and incubated at 37±1 °C, 5±1 % CO₂, 95 % RH for 24±2 hours. Subsequently, tissues are transferred to fresh assay medium and placed in the incubator for an additional period of 18±2 hours. Then, the MTT assay is performed by transferring the tissues to 24-well plates containing MTT medium (1 mg/ml) and incubated for 3 hours. Then, the blue formazan salt formed by cellular mitochondria is extracted with 2.0 ml/tissue of isopropanol (extractant solution, part # MTT-100-EXT) and the optical density of the extracted formazan is determined at 570 nm using a spectrophotometer. Relative tissue viability is calculated for each tissue as % of the mean viability of the negative control tissues. Figure 5 and Table 5 present the results of the skin irritation test.

**Table 5. Classification of test nano-emulsions based on the prediction model developed by MatTek for skin irritation. NC: DPBS; PC: 5% SDS. NC, negative control; PC, positive control; NI, non-irritant; I, irritant.**

| **Code** | **Mean of viabilities, %** | **Difference** | **Difference/2** | **Classification** |
|---|---|---|---|---|
| NC | 100 | 0.919837011 | 0.0459918506 | NI, qualified |
| PC | 2.828095373 | 0.355024811 | 0.177512406 | I, qualified |
| NANO-2% Yarrow | 91.76987937 | 2.267317545 | 1.133658773 | NI, qualified |
| NANO-1% Yarrow-1% Lavandin | 104.7181991 | 6.660749586 | 3.330374793 | NI, qualified |

Nano-emulsion 1 of Example 2 (Yarrow essential oil (2% *Achillea millefolium* essential oil)) or nano-emulsion 2 of Example 2 (mixture of 1% Yarrow essential oil (*Achillea millefolium* essential oil) with 1% Lavandin oil *(Hybrid Lavandula intermedia* essential oil) [1:1 w/w]) are classified as non-irritant for the human skin, since the relative tissue viability is higher than 50% of the mean viability of the corresponding negative controls (Figure 5 and Table 5).

### Example 6

### EYE IRRITATION. In vitro eye irritation test of nano-emulsions of Yarrow essential oil (2% Achillea millefolium essential oil) or nano-emulsion of mixture of 1% Yarrow essential oil (Achillea millefolium essential oil) with 1% Lavandin oil (Hybrid Lavandula intermedia essential oil) [1:1 w/w].

The EpiOcular^{™} eye irritation test (Stern, Klausner et al., 1998) (OCL-200-EIT) purchased by MatTek was used in this study to evaluate the eye irritation potential of nano-emulsion 1 of Example 2 (Yarrow essential oil (2% *Achillea millefolium* essential oil)) or of nano-emulsion 2 of Example 2 (mixture of 1% Yarrow essential oil (*Achillea millefolium* essential oil) with 1% Lavandin oil *(Hybrid Lavandula intermedia* essential oil) [1:1 w/w]).

Fresh tissues are equilibrated at RT for 15 min, then, transferred onto 6-well plates and pre-incubated at standard culture conditions for 1 hour in assay medium, which is DMEM based medium (MatTek), then, replaced, and tissues are incubated overnight under standard culture conditions. The tissues are prehydrated with Ca⁺⁺Mg⁺⁺Free-DPBS and incubated at standard culture conditions for 30±2 min. Each nano-emulsion (dose: 200 µg EO/cm²) and control samples are applied topically on the EpiOcular^{™} tissues. The tissues are incubated for 30±2 min followed by removal of the nano-emulsions by extensive rinsing of the tissues with Ca⁺⁺Mg⁺⁺Free-DPBS. The tissues are transferred to and immersed in 5 ml pre-warmed assay medium for 12±2 min at RT,-then, transferred onto 6-well plates containing 1 ml assay medium and incubated at 37±1°C, 5±1 % CO₂, 95 % RH for 120±15 min. Finally, the MTT assay is performed, and the relative tissue viability is calculated for each tissue as % of the mean viability of the negative control tissues. Figure 6 and Table 6 present the results of the eye irritation test.

**Table 6. Classification of test nano-emulsions based on the prediction model developed by MatTek for ocular irritation. NC: sterile deionized water; PC: methyl acetate. NC, negative control; PC, positive control; NI, non-irritant; I, irritant.**

| **Code** | **Mean of viabilities, %** | **Difference of viabilitioes** | **Difference/2** | **Classification** |
|---|---|---|---|---|
| NC | 100 | 1.073247428 | 0.536623714 | NI, qualified |
| PC | 13.45660867 | 0.088867621 | 0.044433811 | I, qualified |
| NANO-2% Yarrow | 90.60054004 | 0.266602864 | 0.133301432 | NI, qualified |
| NANO-1% Yarrow-1% Lavandin | 85.56926547 | 0.745120826 | 0.372560413 | NI, qualified |

A testing article is classified as irritant for the eyes if the mean relative tissue viability of individual tissues exposed to the test substance is reduced below 60% of the mean viability of the negative controls. Nano-emulsions of the Yarrow essential oil (2% *Achillea millefolium* essential oil) or nano-emulsion of the mixture of 1% Yarrow essential oil *(Achillea millefolium* essential oil) with 1% Lavandin oil *(Hybrid Lavandula intermedia* essential oil) [1:1 w/w] are classified as non-irritant for the eyes, since the relative tissue viability is higher than 60% of the mean viability of the corresponding negative controls (Figure 6 and Table 6).

### Example 7

### SKIN HYDRATION. Moisturizing properties of nano-emulsions of the Yarrow essential oil (2% Achillea millefolium essential oil) or nano-emulsion of the mixture of 1% Yarrow essential oil (Achillea millefolium essential oil) with 1% Lavandin oil (Hybrid Lavandula intermedia essential oil) [1:1 w/w].

Moisturizing properties of nano-emulsion 1 of Example 2 (Yarrow essential oil (2% *Achillea millefolium* essential oil)) or of nano-emulsion 2 of Example 1 (mixture of 1% Yarrow essential oil *(Achillea millefolium* essential oil) with 1% Lavandin oil (*Hybrid Lavandula intermedia* essential oil) [1:1 w/w]) were evaluated by measuring the electrical impedance of 3D-resconstructed human skin upon topical application of test nano-emulsions.

First, tissue culture media is replaced with fresh, pre-warmed media. Under sterile conditions, *i.e.,* in a laminar flow cell culture hood, tissues are equilibrated (with the lids open) for 90 min at ambient temperature and relative humidity. Then, the tissues are exposed topically to each test nano-emulsion for 60 min (dose: 200µg EO/cm²). Then, residual test nano-emulsion is removed from the skin surface using a sterile cotton swab and skin hydration is evaluated by measuring the electrical impedance of the tissue surface (DPM 9003 Nova Meter, Nova Technologies) at time points 0, 5, 10, 20, 30, 45, and 60 min, post-exposure.

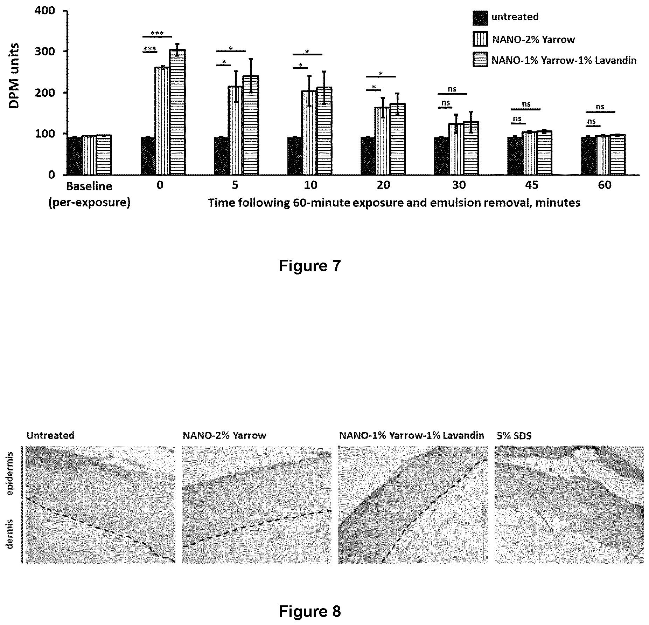

Application of test nano-emulsions on 3D- reconstructed human skin initially produces higher DPM values compared to untreated tissues, indicative of enhanced moisturizing properties. As the observed moisturizing effect decreases with time, DPM values gradually decline towards the levels of untreated skin (Figure 7).

### Example 8

### SKIN TOXICITY. Histological analysis of 3D-human skin and quantification of relative expression of tight junction proteins upon treatment with nano-emulsions of the Yarrow essential oil (2% Achillea millefolium essential oil) or nano-emulsion of the mixture of 1% Yarrow essential oil (Achillea millefolium essential oil) with 1% Lavandin oil (Hybrid Lavandula intermedia essential oil) [1:1 w/w]

Following topical application of nano-emulsion 1 of Example 2 (Yarrow essential oil (2% *Achillea millefolium* essential oil)) or of nano-emulsion 2 of Example 2 (mixture of 1% Yarrow essential oil *(Achillea millefolium* essential oil) with 1% Lavandin oil (*Hybrid Lavandula intermedia* essential oil) [1:1 w/w]) on 3D human skin tissues, for 48 hours, skin specimens are collected and further processed for: [1] histological analysis (Furio, Pampalakis et al., 2015) and [2] molecular analysis.

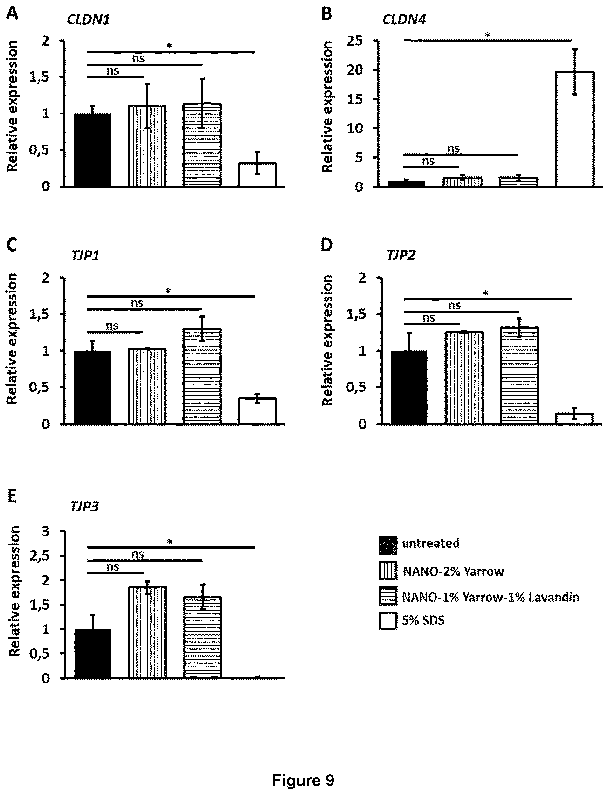

First, 3D-reconstructed human skin tissue culture media is replaced with fresh, pre-warmed media. Under sterile conditions, tissues are exposed topically to each test nano-emulsion (dose, 200 µg EO/cm²). 5% SDS a widely known skin irritant was used as positive control. Following incubation for 48 hours at 37°C, 5% CO₂ the 3D human skin specimens were collected, embedded in paraffin and 5 µm sections were cut, stained with eosin and hematoxylin, and finally, observed under a light microscope using Zeiss Zen microscope software (Figure 8). Alternatively, total RNA was extracted from 3D human skin tissues (Macherey-Nagel) to quantify relative expression of tight junction proteins with the aim to test for potential alterations in expression levels (Figure 9 ). Concentration and purity of RNAs isolated from 3D human skin tissues are listed in Table 7. Then, synthesized cDNAs (SuperScript^{™} First-Strand Synthesis System for RT-PCR, Invitrogen) were used as template for RT-qPCR (SYBR^{™} Select, Applied Biosystems) to quantify the relative expression levels of tight junction proteins encoding genes using the gene-specific primers enlisted in Table 8.

**Table 7. Concentration and purity of RNAs isolated from 3D skin tissues.**

| **RNA sample** | **A_{260/280}nm** | **C, ng/µl** |
|---|---|---|
| Untreated, nr 1 | 1.98 | 129.6 |
| Untreated, nr 2 | 2.02 | 160.0 |
| NANO-2% Yarrow, nr 1 | 2.02 | 142.4 |
| NANO-2% Yarrow, nr 2 | 1.95 | 120.0 |
| NANO-1% Yarrow-1% Lavandin, nr 1 | 1.98 | 141.0 |
| NANO-1% Yarrow-1% Lavandin, nr 2 | 2.00 | 176.0 |

**Table 8. Quantitect primer assays used for quantification of TJ proteins.**

| **Targeted gene** | **Encoded protein** | **Quantitect primer assays, QIAGEN** |
|---|---|---|
| *CLDN1* | Claudin-1 | CLDN1 |
| *CLDN4* | Claudin-4 | CLDN4 |
| *TJP1* | Tight junction protein ZO-1 | TJP1 |
| *TJP2* | Tight junction protein ZO-2 | TJP2 |
| *TJP3* | Tight junction protein ZO-3 | TJP3 |

Figure 8 shows that the untreated 3D skin has normal morphology by eosin and hematoxylin staining. Specifically, the stratum corneum is dense and granules are observed in the stratum granulosum, as expected. Nuclei of proliferating keratinocytes in the stratum spinosum and stratum basal are typically round. For 3D human skin tissues exposed to test nano-emulsions, no signs of epidermis irritation or other alterations can be observed, and tissue morphology resembles that of untreated 3D skin. Histological staining of the tissues with eosin and hematoxylin treated with 5% SDS revealed a high degree of damage, from the outermost part (stratum corneum) to the stratum basal, which are illustrated by morphological alterations typical of skin irritation, with loss of stratum corneum as well as destruction and removal of the stratum granulosum. Moreover, detachment of epidermis from the underneath dermis-is observed. Expression of tight junction (TJ) proteins encoding genes, including *CLDN1, CLDN4, TJP1, TJP2* and *TJP3,* is not altered in 3D human skin tissues topically exposed to nano-emulsions of the Yarrow essential oil (2% *Achillea millefolium* essential oil) or nano-emulsion of the mixture of 1% Yarrow essential oil *(Achillea millefolium* essential oil) with 1% Lavandin oil *(Hybrid Lavandula intermedia* essential oil) [1:1 w/w] compared to untreated 3D skin.

### References

Azmi NAN, Elgharbawy AAM, Motlagh SR, Samsudin N, Salleh HM (2019) Nanoemulsions: Factory for Food, Pharmaceutical and Cosmetics. 7: 617
Benelli G, Bedini S, Flamini G, Cosci F, Cioni PL, Amira S, Benchikh F, Laouer H, Di Giuseppe G, Conti B (2015) Mediterranean essential oils as effective weapons against the West Nile vector Culex pipiens and the Echinostoma intermediate host Physella acuta: what happens around? An acute toxicity survey on non-target mayflies. Parasitology Research 114: 1011-1021
Biessmann H, Nguyen QK, Le D, Walter MF (2005) Microarray-based survey of a subset of putative olfactory genes in the mosquito Anopheles gambiae. Insect Molecular Biology 14: 575-589
Campanacci V, Krieger J, Bette S, Sturgis JN, Lartigue A, Cambillau C, Breer H, Tegoni M (2001) Revisiting the specificity of Mamestra brassicae and Antheraea polyphemus pheromone-binding proteins with a fluorescence binding assay. J Biol Chem 276: 20078-84
Conti B, Canale A, Bertoli A, Gozzini F, Pistelli L (2010) Essential oil composition and larvicidal activity of six Mediterranean aromatic plants against the mosquito Aedes albopictus (Diptera: Culicidae). Parasitology Research 107: 1455-1461
de Brito GA, de Oliveira PFR, de Andrade Silva CM, de Araujo Neto MF, Leite FHA, Mesquita PRR, Mota TF, Magalhaes Junior JT (2021) Identification of bioactive compounds against Aedes aegypti (Diptera: Culicidae) by bioassays and in silico assays. Chem Biodivers
do Bomfim MR, Araujo JSC, Macedo W, Santos C, Leite FHA (2020) Identification of potential modulator of Anopheles gambiae odorant binding protein 1 by hierarchical virtual screening and molecular dynamics. J Biomol Struct Dyn: 1-13
Furio L, Pampalakis G, Michael IP, Nagy A, Sotiropoulou G, Hovnanian A (2015) KLK5 Inactivation Reverses Cutaneous Hallmarks of Netherton Syndrome. Plos Genetics 11
Giatropoulos A, Papachristos DP, Kimbaris A, Koliopoulos G, Polissiou MG, Emmanouel N, Michaelakis A (2012) Evaluation of bioefficacy of three Citrus essential oils against the dengue vector Aedes albopictus (Diptera: Culicidae) in correlation to their components enantiomeric distribution. Parasitol Res 111: 2253-63
Isman MB, Miresmailli S, Machial C (2011) Commercial opportunities for pesticides based on plant essential oils in agriculture, industry and consumer products. Phytochemistry Reviews 10: 197-204
Jaenson TGT, Palsson K, Borg-Karlson AK (2006) Evaluation of extracts and oils of mosquito (Diptera : Culicidae) repellent plants from Sweden and Guinea-Bissau. Journal of Medical Entomology 43: 113-119
Koul O, Walia S, Dhaliwal GS, Nagar P (2008) Essential oils as green pesticides potential and constraints. Biopesticides International 4: 63-84
Kröber T, Koussis K, Bourquina M, Tsitoura P, Konstantopoulou M, Awolola TS, Danie FR, Qiao H, Pelosi P, latrou K, Guerin PM (2018) Odorant-binding protein-based identification of natural spatial repellents for the Africa malaria mosquito Anopheles gambiae. Insect Biochemistry and Molecular Biology 96: 36-50
Kythreoti G, Sdralia N, Tsitoura P, Papachristos DP, Michaelakis A, Karras V, Ruel DM, Yakir E, Bohbot JD, Schulz S, latrou K (2021) Volatile allosteric antagonists of mosquito odorant receptors inhibit human-host attraction. J Biol Chem 296: 100172. Online ahead of print
Lachman L (1976) The theory and practice of industrial pharmacy / [edited by] Leon Lachman, Herbert A. Lieberman, Joseph L. Kanig. Lea & Febiger, Philadelphia
Lee MY (2018) Essential Oils as Repellents against Arthropods. Biomed Res Int 2018: 6860271
Montenegro L, Lai F, Offerta A, Sarpietro MG, Micicchè L, Maccioni AM, Valenti D, Fadda AM (2016) From nanoemulsions to nanostructured lipid carriers: A relevant development in dermal delivery of drugs and cosmetics. J Drug Deliv Sci Technol 32, part 2: 100-112
Nedovic V, Kalusevic A, Manojlovic V, Levic S, Bugarski B (2011) An overview of encapsulation technologies for food applications. Procedia Food Science 1: 1806-1815
Nemeth E, Bernath J (2008) Biological Activities of Yarrow Species (Achillea spp.). Current Pharmaceutical Design 14: 3151-3167
Nerio LS, Olivero-Verbel J, Stashenko E (2010) Repellent activity of essential oils: a review. Bioresour Technol 101: 372-8
Pohlit AM, Lopes NP, Gama RA, Tadei WP, Neto VFD (2011) Patent Literature on Mosquito Repellent Inventions which Contain Plant Essential Oils - A Review. Planta Medica 77: 598-617
Regnault-Roger C, Vincent C, Arnason JT (2012) Essential Oils in Insect Control: Low-Risk Products in a High-Stakes World. 57: 405-424
Schafer-Korting M, Bock U, Diembeck W, Duesing HJ, Gamer A, Haltner-Ukomadu E, Hoffmann C, Kaca M, Kamp H, Kersen S, Kietzmann M, Korting HC, Krachter HU, Lehr CM, Liebsch M, Mehling A, Mueller-Goymann C, Netzlaff F, Niedorf F, Rubbelke MK et al. (2008) The use of reconstructed human epidermis for skin absorption testing: results of the validation study. Atla-Alternatives to Laboratory Animals 36: 161-187
Sonneville-Aubrun O, Simonnet JT, L'Alloret F (2004) Nanoemulsions: a new vehicle for skincare products. Adv Colloid Interface Sci 108-109: 145-9
Stern M, Klausner M, Alvarado R, Renskers K, Dickens M (1998) Evaluation of the EpiOcular((TM)) Tissue Model as an Alternative to the Draize Eye Irritation Test. Toxicology in vitro : an international journal published in association with BIBRA 12: 455-61
Suganya V, Anuradha V (2017) Microencapsulation and Nanoencapsulation: A Review. International Journal of Pharmaceutical and Clinical Research 9: 233-239
Syed Z, Leal WS (2008) Mosquitoes smell and avoid the insect repellent DEET. Proc Natl Acad Sci U S A 105: 13598-603
Theochari I, Giatropoulos A, Papadimitriou V, Karras V, Balatsos G, Papachristos D, Michaelakis A (2020) Physicochemical Characteristics of Four Limonene-Based Nanoemulsions and Their Larvicidal Properties against Two Mosquito Species, Aedes albopictus and Culex pipiens molestus. Insects 11: 740
Thireou T, Kythreoti G, Tsitsanou KE, Koussis K, Drakou CE, Kinnersley J, Krober T, Guerin PM, Zhou JJ, latrou K, Eliopoulos E, Zographos SE (2018) Identification of novel bioinspired synthetic mosquito repellents by combined ligand-based screening and OBP-structure-based molecular docking. Insect Biochem Mol Biol 98: 48-61
Tsitoura P, Koussis K, latrou K (2015) Inhibition of Anopheles gambiae Odorant Receptor Function by Mosquito Repellents. Journal of Biological Chemistry 290: 7961-7972

## Claims

1. A mosquito repellent emulsion comprising as active ingredient essential oil of *Achillea millefolium* dispersed in a continuous phase comprising water, wherein the emulsion further comprises
a surfactant selected from a mono- or diglyceride of a fatty acid, sorbitan ester ethoxylate, polyoxyethylene sorbitan ester, sorbitan trioleate, polyethylene glycol-8 caprylic/capric glycerides, or a mixture thereof, and
a co-solvent selected from ethanol, glycerol, or diethylene glycol monoethyl ether.

2. The mosquito repellent emulsion according to claim 1, wherein the emulsion is a nano-emulsion.

3. The mosquito repellent emulsion according to claim 1 or 2, wherein the concentration of the *Achillea millefolium* essential oil in the emulsion is from 0.1% to 10% w/w.

4. The mosquito repellent emulsion according to any one of the preceding claims, wherein the concentration of the *Achillea millefolium* essential oil in the emulsion is from 0.2% to 6% w/w, preferably from 0.5% to 4% w/w.

5. The mosquito repellent emulsion according to any one of the preceding claims, wherein the total concentration of the surfactant in the emulsion is from 0.1% to 15% w/w.

6. The mosquito repellent emulsion according to any one of the preceding claims, wherein the total concentration of the surfactant in the emulsion is from 0.5% to 10% w/w, preferably from 1% to 6% w/w.

7. The mosquito repellent emulsion according to any one of the preceding claims, wherein the total concentration of the cosolvent in the emulsion is from 0.1% to 10% w/w.

8. The mosquito repellent emulsion according to any one of the preceding claims, wherein the total concentration of the cosolvent in the emulsion is from 0.2% to 5% w/w, preferably from 0.5% to 1.5% w/w.

9. The mosquito repellent emulsion according to any one of the preceding claims, wherein the emulsion further comprises an essential oil from a plant selected from Origanum spp., Mentha spp., Lavandula spp or Melissa spp..

10. The mosquito repellent emulsion according to any one of the preceding claims, wherein the emulsion further comprises an essential oil from *Hybrid Lavandula intermedia.*

11. The mosquito repellent emulsion according to any one of the preceding claims, comprising
from 1% to 3% w/w essential oil of *Achillea millefolium,*
from 0.5% to 1.5% w/w polyethylene glycol-8 -8 caprylic/capric glycerides,
from 1.5% to 2.5% w/w polysorbate 80,
from 0.5% to 1.5% w/w sorbitan trioleate,
from 0.5% to 1.5% w/w diethylene glycol monoethyl ether and
water.

12. The mosquito repellent emulsion according to any one of the preceding claims, comprising
from 1% to 3% w/w essential oil of *Achillea millefolium,*
from 0.5% to 1.5% w/w essential oil of *Hybrid Lavandula intermedia,*
from 0.5% to 1.5% w/w polyethylene glycol-8 -8 caprylic/capric glycerides,
from 1.5% to 2.5% w/w polysorbate 80,
from 0.5% to 1.5% w/w sorbitan trioleate,
from 0.5% to 1.5% w/w diethylene glycol monoethyl ether and
water.

13. Use of the emulsion according to any one of the preceding claims as mosquito repellant.

14. Use of the emulsion according to any one of claims 1 to 12 in the preparation of a lotion, cream, ointment, spray, or gel.

15. Use of essential oil of *Achillea millefolium* as mosquito repellent.
